# EUROPEAN PATENT SPECIFICATION

(11) **EP 2 797 150 B1**
(45) Date of publication and mention of the grant of the patent: **15.11.2017**
(21) Application number: 12860314.9
(22) Date of filing: 21.12.2012
(51) Int. Cl.: H01M 8/04, F24F 6/00, H01M 8/06

(54) **HUMIDIFYING HEAT EXCHANGER FOR FUEL CELL**
VERDAMPFUNGS-WÄRMETAUSCHER FÜR EINE BRENNSTOFFZELLE
ECHANGEUR DE CHALEUR D'ÉVAPORATION POUR PILE A COMBUSTIBLE

(30) Priority: 23.12.2011 KR 20110141354; 14.05.2012 KR 20120050955
(43) Date of publication of application: 29.10.2014
(73) Proprietor: Posco Energy Co. Ltd., Seoul 135-777 (KR); Dae Heung Cooler Co. Ltd., Gyeonggi-do 487-835 (KR)
(72) Inventor: SEO, Kwang Duk, Pohang-si Gyeongsangbuk-do 791-260 (KR); LEE, Jea Jun, Seoul 137-796 (KR); HWANG, Jung Tae, Seoul 138-700 (KR); SEONG, Hoo Gi, Guri-si Gyeonggi-do 471-734 (KR)
(74) Representative: Heinze, Ekkehard
(86) International application number: PCT/KR2012/011215
(87) International publication number: WO 2013/095025

(56) References cited:
- EP-B1- 1 181 241
- WO-A1-2006/126702
- DE-A1- 10 220 099
- GB-A- 1 474 881
- JP-A- H11 322 302
- JP-A- H11 322 302
- JP-A- 2004 185 942
- JP-A- 2007 098 314
- KR-B1- 100 860 115
- KR-B1- 100 951 848

## Description

### TECHNICAL FIELD

The present invention relates to a humidifying heat exchanger for a fuel cell, and more particularly, to a humidifying heat exchanger for a fuel cell, which is not easily broken even though a tube is expanded due to overheat and also is capable of improving heat-exchange efficiency.

### BACKGROUND ART

Fuel cells are units for directly converting chemical energy stored in hydrocarbon fuel into electric energy through an electrochemical reaction. That is, fuel cells are units for directly converting chemical energy into electric energy through a hydrogen oxidation reaction in an anode and an oxidation reduction reaction in a cathode. A fuel cell system for producing electricity through above-described reactions may include a fuel cell stack, a mechanical balance of plant (MBOP), and an electrical balance of plant (EBOP). The fuel cell stack may be a unit for producing electricity through the electrochemical reaction, the MBOP may be a unit for supplying oxygen and hydrogen into the fuel cell stack, and the EBOP may be a unit for converting a DC power applied into the fuel cell stack into an AC power through an inverter to supply the converted AC power to desired units.

However, hydrogen has to be supplied to the anode of the fuel cell stack to perform the oxidation reaction on the anode. In a high-temperature fuel cell such as a molten carbonate fuel cell (MCFC) reforms hydrocarbon contained in the fuel (for example, liquefied natural gas (LNG)) for the fuel cell into hydrogen by using a reformer to supply hydrogen into the anode. Here, a reforming reaction occurring in the reformer requires water. However, since liquid water may damage the reforming catalyst, gaseous water together with the fuel for the fuel cell has to be supplied into the reformer. When the gaseous water is supplied into the reformer, the fuel for the fuel cell may be easily mixed with the water. Thus, the high-temperature fuel cell such as the MCFC includes a humidifying heat exchanger for evaporating the water to mix the evaporated water with the fuel for the fuel cell, thereby supplying the gaseous water.

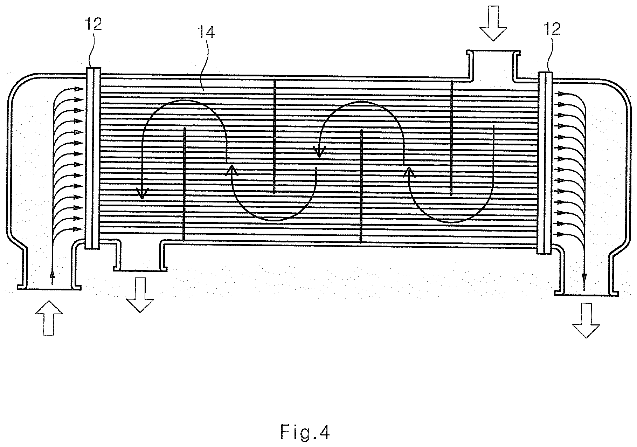

A fixed tube sheet heat exchanger of a multi-tubular heat exchanger humidifying heat exchanger is used as the humidifying heat exchanger. The fixed tube sheet heat exchanger includes tube sheets 12 on both ends in a longitudinal direction thereof and a tube 14 fixed between the tube sheets 12 as illustrated in FIG. 4. However, a coupled portion between the tube sheets 12 and the tube 4 may be easily broken due to the above-described structure of the humidifying heat exchanger described according to the related art.

In detail, since the tube 14 is overheated during heat exchange, the tube 14 is expanded in an axis direction (in a longitudinal direction of the tube 14). However, since the tube 14 is coupled to the tube sheets 12 at both ends thereof in the longitudinal direction, the expansion of the tube 14 is restrained by the tube sheets 12. Thus, stress may be concentrated into the coupled portion between the tube sheets 12 and the tube 14 due to the restraint in expansion of the tube 14. Therefore, the fixed tube sheet heat exchanger according to the related art may be easily broken (or deformed) at the coupled portion between the tube sheets 12 and the tube 14.

### DISCLOSURE OF THE INVENTION

### TECHNICAL PROBLEM

Therefore, to solve the foregoing limitation, the present invention provides a humidifying heat exchanger for a fuel cell, which is not easily broken even though a tube is expanded due to overheat and also is capable of improving heat-exchange efficiency.

### TECHNICAL SOLUTION

According to an aspect of the present invention, there is provided a humidifying heat exchanger for a fuel cell, including: a body comprising a gas inflow hole defined in one end thereof and a gas discharge hole defined in the other end thereof in a longitudinal direction; a first tube disposed in the body, the first tube being spirally wound along the longitudinal direction of the body; a flow diffusion unit passing through a center of the first tube and extending along the longitudinal direction of the body; a supply unit disposed at a side of the gas discharge hole to supply a mixture of a fuel and water into the first tube; and a discharge unit disposed at a side of the gas inflow hole to discharge the mixture from the first tube. tube, wherein the flow diffusion unit prevents a gas introduced into the gas inflow hole from passing the center of the first tube and makes the gas diffuse to the outside.

### ADVANTAGEOUS EFFECTS

In the humidifying heat exchanger for the fuel cell according to the embodiment of the present invention, since the tubes within the humidifying heat exchanger are wound along the longitudinal direction of the body, the tubes may absorb the expansion even though the tubes are expanded due to the overheat, thereby preventing the tubes from being broken. Also, since one tube surrounds the other tube, or the flow diffusion unit passing through the center of the tube diffuses the high-temperature gas to the outside, the body increases in heat-exchange area, thereby improving the heat exchange efficiency.

### BRIEF DESCRIPTION OF THE DRAWINGS

FIG. 1 is a front view of a humidifying heat exchanger according to an embodiment of the present invention;
FIG. 2 is a side cross-sectional view illustrating the humidifying heat exchanger of FIG. 1;
FIG. 3 is a cross-sectional view taken along line A-A of FIG. 2; and
FIG. 4 is a front view of a humidifying heat exchanger according to a related art.

### MODE FOR CARRYING OUT THE INVENTION

Hereinafter, preferred embodiments of the present invention will be described below in more detail with reference to the accompanying drawings. However, the present invention is not limited thereto.

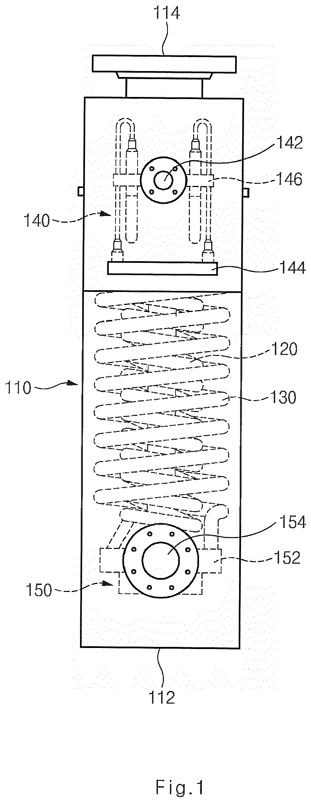

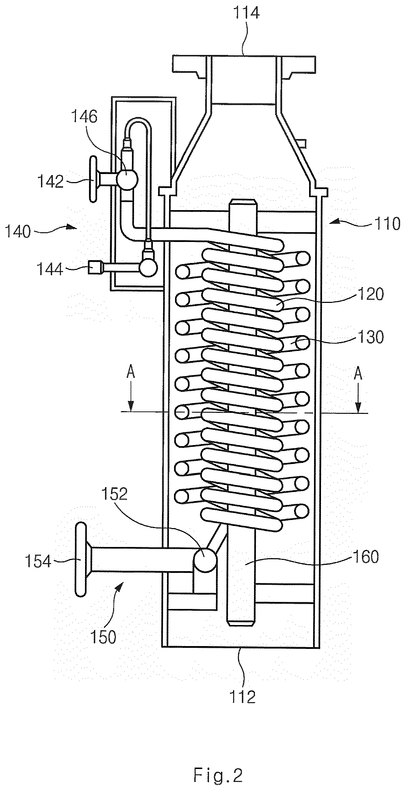

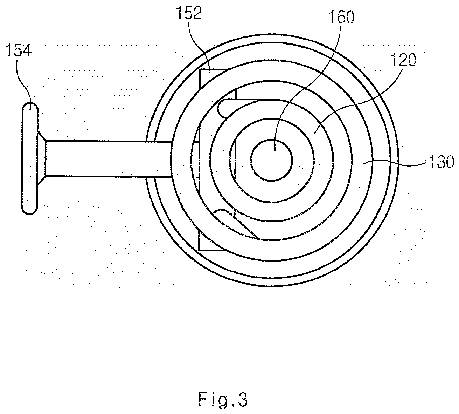

FIG. 1 is a front view of a humidifying heat exchanger according to an embodiment of the present invention, FIG. 2 is a side cross-sectional view illustrating the humidifying heat exchanger of FIG. 1, and FIG. 3 is a cross-sectional view taken along line A-A of FIG. 2. As illustrated in FIGS. 1 and 2, a humidifying heat-exchanger according to the current embodiment fundamentally includes a body 110. The body 110 forms a shell of the humidifying heat-exchanger and includes a gas inflow hole 112 defined in one end of a longitudinal direction (a vertical direction of FIGS. 1 or 2) of the body 110 and a gas discharge hole 114 defined in the other end of the longitudinal direction of the body.

High-temperature gas introduced into the gas inflow hole 112 heats a mixture in a first tube 120 that will be described later (also, as described below, if a second tube is further provided, the high-temperature gas heats a mixture in the second tube). In other words, the high-temperature gas introduced into the gas inflow hole 112 and discharged to the gas discharge hole 114 is heat-exchanged with the mixture in the first tube 120, and thus the mixture in the first tube 120 increases in temperature due to the heat-exchange. In this process, liquid water in the mixture is evaporated into gaseous water, and a fuel in the mixture is heated to an appropriate temperature. As described above, the high-temperature gas heating the mixture (or mixtures in the first and the second tubes) in the first tube 120 may be a cathode exhaust gas exhausted from a cathode of a fuel cell stack.

For reference, the gas inflow hole 112 and the gas discharge hole 114 may be defined in both ends of the body 110, respectively, as illustrated in FIGS. 1 and 2. When the gas inflow hole 112 and the gas discharge hole 114 are respectively defined in both ends of the body 110 as described above, the gas may linearly flow. Thus, the gas may smoothly flow. However, in some cases, the gas inflow hole 112 and the gas discharge hole 114 may be defined in peripheries of both ends of the body 110. In this case, the gas inflow hole 112 and the gas discharge hole 114 may be defined in a direction (a horizontal direction of FIGS. 1 and 2) perpendicular to the longitudinal direction of the body 110.

The first tube 120 through which a mixture of a fuel and water flows may be disposed within the body 110. The first tube 120 is spirally wound along the longitudinal direction of the body 110 as illustrated in FIGS. 1 and 2. Since the tube 120 according to the current embodiment has the spiral structure, the tube 120 is not easily broken even though the tube 120 is overheated. In detail, the tube 120 according to the current embodiment has a shape such as a kind of spring. Thus, the tube 120 according to the current embodiment may easily absorb the expansion thereof in the longitudinal direction of the body 110 or the direction perpendicular to the longitudinal direction of the body 110 even though the tube 120 is expanded due to overheat.

For example, the tube 120 according to the current embodiment may easily absorb the expansion thereof due to the shape similar to a spring even though the tube 120 is pushed inward (that is, the tube 120 is pushed inward from an upper end or lower end of FIG. 2) or pulled outward (that is, the tube 120 is pulled outward from the upper end or lower end of FIG. 2). Since the tube 120 according to the current embodiment has the shape similar to the spring, that is, the tube 120 is spirally wound along the longitudinal direction of the body 110, the tube 120 may be easily deformed even though the tube 120 is expanded due to overheat. Thus, since the tube 120 has very few portions at which the expansion of the tube 120 is restricted, that is, the tube 120 has very few portions to which stress is concentrated, the tube 120 may not be easily broken.

Alternatively, two tubes may be provided. That is, the humidifying heat exchanger according to the current embodiment may further include the second tube 130 spirally wound along the longitudinal direction of the body 110 to surround the first tube 120 at the outside of the first tube 120. As described above, when one tube 130 surrounds the other tube 120, the heat exchange is more efficiently performed. In detail, the body 110 forming the shell of the humidifying heat exchanger has a general cylindrical shape. Thus, when the two tubes are spirally wound within the body 110 having the cylindrical shape, heat exchange is efficiently performed because a heat transfer area increases when compared to the case in which only one tube is provided. That is, the humidifying heat exchanger according to the current embodiment has a structure in which one tube 130 surrounds the other tube 120 to increase the heat transfer area, thereby increasing heat-exchange efficiency.

Here, the first tube 120 and the second tube 130 may be wound in directions opposite to each other as illustrated in FIG. 2 so as to further improve heat-exchange efficiency. For example, if the first tube 120 is wound in a counterclockwise direction, the second tube 130 may be wound in a clockwise direction to improve the heat-exchange efficiency. In detail, the more the high-temperature gas introduced into the gas inflow hole 112 flows irregularly, the more heat-exchange efficiency increases. This is done because possibility in contact between the high-temperature gas and the tube increases when the high temperature gas irregularly flows. In other words, when the high-temperature gas regularly flows (for example, linearly or layered), the high-temperature gas discharged into the gas discharge hole 114 increases in possibility without being contact with the tube.

Therefore, the humidifying heat-exchanger may allow the high-temperature gas to flow irregularly (for example, a turbulent flow) to improve heat-exchange efficiency. The first tube 120 and the second tube 130 may be wound in the directions opposite to each other so as to allow the high-temperature gas to flow irregularly. When the first tube 120 and the second tube 130 are wound in the directions opposite to each other, the high-temperature gas may more irregularly flow because a flow of the gas is more restricted when compared to a case in which the first and second tubes 120 and 130 are wound in the same direction.

Since the humidifying heat exchanger according to the current embodiment has the two tubes 120 and 130 wound in directions opposite to each other, the gas introduced into the gas inflow hole 112 may flow irregularly to contact the tubes 120 and 130 with a larger area, thereby improving heat-exchange efficiency.

Also, the humidifying heat exchanger according to the current embodiment includes a supply unit 140 for supplying the mixture of the fuel and the water to the first and second tubes 120 and 130. The supply unit 140 includes a fuel supply part 142 through which the fuel is supplied, a water supply part 144 through which the water is supplied, and a mixing part 146 in which the fuel supplied from the fuel supply part 142 and the water supplied from the water supply part 144 is mixed. The mixing part 146 may be sufficient to have a hollow space therein so that the fuel and the water are mixed therein. For example, even if the mixing part 146 has a structure where a tube in which the fuel flows is simply connected to a tube in which the water flows, a portion where the tube in which the fuel flows is in contact with the tube in which the water flows may be a kind of mixing part.

The first and second tubes 120 and 130 are connected to the mixing part 146. The first and second tubes 120 and 130 may be directly connected to the mixing part 146 or be indirectly connected to the mixing part 146 through the other tube. Thus, the fuel supplied from the fuel supply part 142 and the water supplied from the water supply part 144 may be mixed in the mixing part 146 and then supplied to the first and second tubes 120 and 130.

The mixture of the fuel and the water supplied from the supply unit 140 to the tubes 120 and 130 is heat-exchanged with the high-temperature gas within the body 110 and then discharged to the outside of the body 110 through a discharge unit 150. The discharge unit 150 includes a collection tube 152 and a discharge tube 154. The collection tube 152 is a tube to which the mixtures from the first and second tubes 120 and 130 are collected, and the discharge tube 154 is a tube connected to the collection tube 152 to discharge the mixtures collected in the collection tube 152 to the outside of the body 110. However, the collection tube 152 may be sufficient to have an empty space therein, like the above-described mixing part 146 so that the mixtures from the first and second tubes 120 and 130 are received in the empty space. For example, even if the collection tube 152 has a structure in which the first and second tubes are simply connected to the discharge tube, a portion where the discharge tube is in contact with the first and second tubes may be a kind of collection tube.

The supply unit 140 and the discharge unit 150 may be disposed on sides opposite to the gas inflow hole 112 and the gas discharge hole 114, respectively. That is, the supply 140 is disposed at a side of the gas discharge hole 114, and the discharge unit 150 is disposed at a side of the gas inflow hole 112 in the current embodiment, as illustrated in FIG. 2, Thus, a low-temperature fluid (the mixture of the fuel and the water) flowing from the supply unit 140 to the discharge unit 150 and a high-temperature fluid (the high-temperature gas) flowing from the gas inflow hole 112 to the gas discharge hole 114 may flow in directions opposite to each other. The high-temperature fluid (the high-temperature gas) and the low-temperature fluid (the mixture of the fuel and the water) flow in directions opposite to each other in the humidifying heat exchanger according to the current embodiment.

The first tube 120 is coupled to the body 110 at a side of the supply unit 140, and the second tube 130 is coupled to collection tube 152 at a side of the discharge unit 150, as illustrated in FIG. 2. Through the above-described coupling structure, the tubes 120 and 130 may not be easily broken due to overheat. In detail, since the expansion due to the overheat is restricted at the coupled portions of the tubes, stress may be concentrated into the coupled portions of the tubes 120 and 130.

However, when the coupled portions are disposed on both ends in the longitudinal direction as described in the current embodiment, a tube having a spring shape may absorb the expansion before the stress is concentrated to the coupled portions. That is, since the tube having a spring shape is disposed between the coupled portions to absorb most of the expansion due to the overheat, the stress applied to the coupled portions may be slight. Therefore, as described in the current embodiment, when the tubes are coupled to the body 110 at the side of the supply unit 140 and to the collection tube 152 at the side of the discharge unit 150, the tubes may not be merely broken due to overheat.

The humidifying heat exchanger according to the current embodiment includes a flow diffusion unit 160 passing through the center of the first tube 120 and extending along the longitudinal direction of the body 110. As described above, the humidifying heat exchanger according to the current embodiment may further include the second tube 130 outside the first tube 120 so as to sufficiently secure the heat transfer area. However, even though the second tube 130 is further provided in the humidifying heat exchanger, it may be difficult to prevent heat losses due to the high-temperature gas that passes through the center of the first tube 120 from occurring. The humidifying heat exchanger according to the current embodiment is provided with the flow diffusion unit 160 at the center of the first tube 120 to prevent the heat losses from occurring. When the flow diffusion unit 160 is provided, the more amount of high-temperature gas may contact the tubes 120 and 130 because the high-temperature gas does not pass through the center of the first tube 120, that is, the high-temperature gas is diffused to the outside by the flow diffusion unit 160.

Here, the flow diffusion unit 160 has to be lightweight as much as possible. This is done because the heavier flow diffusion unit 160 makes its installation and maintenance more difficult. The flow diffusion unit 160 may have an empty cylindrical shape to reduce a weight thereof in the current embodiment. However, when the flow diffusion unit 160 having the foregoing shape is provided, air within the flow diffusion unit 160 may be expanded due to the high-temperature gas, resulting in breaking of the flow diffusion unit 160. Thus, a discharge hole (not shown) may be defined in the flow diffusion unit 160 according to the current embodiment to prevent the flow diffusion unit 160 from being broken. When the discharge hole is defined in the flow diffusion unit 160, the air within the flow diffusion unit 160 may be discharged to the outside to prevent the flow diffusion unit 160 from being broken due to the expansion.

The discharge hole may be defined in an end of the flow diffusion unit 160 at a side of the gas discharge hole 114 (an upper portion of the flow diffusion unit 160 with respect to the FIG. 2). When the discharge hole is defined in the upper end of the flow diffusion unit 160, the air within the flow diffusion unit 160 may be more naturally discharged to the outside. Also, when the discharge hole is defined in the upper end of the flow diffusion unit 160, the diffusion of the flow may not be restricted. That is, when the discharge hole is defined in a lower portion (a lower side in FIG. 2.) of the flow diffusion unit 160, the high-temperature gas may be introduced into the discharge hole without being diffused as originally intended.

### INDUSTRIAL APPLICABILITY

The present invention relates to a humidity heat exchanger for a fuel cell, which is not easily broken even though a tube is expanded due to overheat and also is capable of improving heat-exchange efficiency.

## Claims

1. A humidifying heat exchanger for a fuel cell, comprising:
a body comprising a gas inflow hole defined in one end thereof and a gas discharge hole defined in the other end thereof in a longitudinal direction;
a first tube disposed in the body, the first tube being spirally wound along the longitudinal direction of the body;
a flow diffusion unit passing through a center of the first tube and extending along the longitudinal direction of the body;
a supply unit disposed at a side of the gas discharge hole to supply a mixture of a fuel and water into the first tube; and
a discharge unit disposed at a side of the gas inflow hole to discharge the mixture from the first tube,
wherein the flow diffusion unit prevents a gas introduced into the gas inflow hole from passing the center of the first tube and makes the gas diffuse to the outside.

2. The humidifying heat exchanger of claim 1, further comprising a second tube disposed within the body and spirally wound along the longitudinal direction of the body, the second tube being disposed outside the first tube to surround the first tube,
wherein the supply unit supplies the mixture into the first and second tubes, and the discharge unit discharges the mixture from the first and second tubes.

3. The humidifying heat exchanger of claim 2, wherein the supply unit comprises:
a fuel supply part through which the fuel is supplied;
a water supply part through which the water is supplied; and
a mixing part in which the fuel supplied from the fuel supply part and the water supplied from the water supply part are mixed, the mixing part being connected to the first and second tubes.

4. The humidifying heat exchanger of claim 2, wherein the discharge unit comprises a collection tube to which the mixture supplied from the first tube and the mixture supplied from the second tube are collected and a discharge tube connected to the collection tube to discharge the mixture to the outside of the body.

5. The humidifying heat exchanger of claim 4, wherein the first and second tubes are coupled to the body at a side of the supply unit and to the collection tube at a side of the discharge unit.

6. The humidifying heat exchanger of claim 1, wherein the flow diffusion unit has a cylindrical shape.

7. The humidifying heat exchanger of claim 1, wherein the flow diffusion unit has an empty cylindrical shape.

8. The humidifying heat exchanger of claim 7, wherein the flow diffusion unit comprises a discharge hole defined in one end at the side of the gas discharge hole to discharge air within the flow diffusion unit.

9. The humidifying heat exchanger of claim 2, wherein the second tube is wound in a direction opposite to the first tube.

## Patentansprüche

1. Befeuchtungswärmetauscher für eine Brennstoffzelle, Folgendes aufweisend:
einen Körper mit einer Gaseinströmöffnung, die in einem Ende von diesem gebildet ist, und einer Gasausleitöffnung, die im anderen Ende von diesem in einer Längsrichtung gebildet ist;
ein erstes Rohr, das im Körper angeordnet ist, wobei das erste Rohr spiralförmig entlang der Längsrichtung des Körpers gewunden ist;
eine Strömungsdiffusionseinheit, die durch die Mitte des ersten Rohrs verläuft und sich entlang der Längsrichtung des Körpers erstreckt;
eine Zuführeinheit auf einer Seite der Gasausleitöffnung zum Zuführen eines Gemischs aus einem Brennstoff und Wasser in das erste Rohr; und
eine Ausleiteinheit, die auf einer Seite der Gaseinströmöffnung zum Ausleiten des Gemischs aus dem ersten Rohr angeordnet ist,
wobei die Strömungsdiffusionseinheit verhindert, dass ein in die Gaseinströmleitung eingeführtes Gas die Mitte des ersten Rohrs durchströmt, und das Gas nach außen diffundieren lässt.

2. Befeuchtungswärmetauscher nach Anspruch 1, darüber hinaus ein zweites Rohr aufweisend, das im Körper angeordnet und spiralförmig entlang der Längsrichtung des Körpers gewunden ist, wobei das zweite Rohr außerhalb des ersten Rohrs, das erste Rohr umgebend angeordnet ist,
wobei die Zuführeinheit das Gemisch in das erste und zweite Rohr zuführt und die Ausleiteinheit das Gemisch aus dem ersten und zweiten Rohr ausleitet.

3. Befeuchtungswärmetauscher nach Anspruch 2, wobei die Zuführeinheit aufweist:
ein Brennstoffzuführteil, durch welches der Brennstoff zugeführt wird;
ein Wasserzuführteil, durch welches das Wasser zugeführt wird; und
ein Mischteil, in dem der vom Brennstoffzuführteil zugeführte Brennstoff und das vom Wasserzuführteil zugeführte Wasser gemischt werden, wobei das Mischteil mit dem ersten und zweiten Rohr verbunden ist.

4. Befeuchtungswärmetauscher nach Anspruch 2, wobei die Ausleiteinheit ein Sammelrohr, in dem das aus dem ersten Rohr zugeführte Gemisch und das aus dem zweiten Rohr zugeführte Gemisch gesammelt werden, und ein Ausleitrohr aufweist, das zum Ausleiten des Gemischs aus dem Körper mit dem Sammelrohr verbunden ist.

5. Befeuchtungswärmetauscher nach Anspruch 4, wobei das erste und zweite Rohr an den Körper auf einer Seite der Zuführeinheit und an das Sammelrohr auf einer Seite der Ausleiteinheit angeschlossen sind.

6. Befeuchtungswärmetauscher nach Anspruch 1, wobei die Strömungsdiffusionseinheit eine zylindrische Form hat.

7. Befeuchtungswärmetauscher nach Anspruch 1, wobei die Strömungsdiffusionseinheit eine hohlzylindrische Form hat.

8. Befeuchtungswärmetauscher nach Anspruch 7, wobei die Strömungsdiffusionseinheit eine Ausleitöffnung aufweist, die in einem Ende auf der Seite der Gasausleitöffnung zum Ausleiten von in der Strömungsdiffusionseinheit vorhandener Luft gebildet ist.

9. Befeuchtungswärmetauscher nach Anspruch 2, wobei das zweite Rohr in einer zum ersten Rohr entgegengesetzten Richtung gewunden ist.

## Revendications

1. Échangeur thermique d'humidification pour pile à combustible, comprenant :
un corps comprenant un orifice d'admission de gaz défini dans une extrémité de celui-ci et un orifice d'évacuation de gaz défini dans l'autre extrémité de celui-ci dans une direction longitudinale ;
un premier tube disposé dans le corps, le premier tube étant enroulé en spirale le long de la direction longitudinale du corps ;
une unité de diffusion de flux passant à travers un centre du premier tube et s'étendant le long de la direction longitudinale du corps ;
une unité d'alimentation disposée d'un côté de l'orifice d'évacuation de gaz pour fournir un mélange d'un combustible et d'eau dans le premier tube ; et
une unité d'évacuation disposée d'un côté de l'orifice d'admission de gaz pour évacuer le mélange depuis le premier tube,
sachant que l'unité de diffusion de flux empêche qu'un gaz introduit dans l'orifice d'admission de gaz passe par le centre du premier tube et fait diffuser le gaz vers l'extérieur.

2. L'échangeur thermique d'humidification de la revendication 1, comprenant en outre un deuxième tube disposé à l'intérieur du corps et enroulé en spirale le long de la direction longitudinale du corps, le deuxième tube étant disposé à l'extérieur du premier tube pour entourer le premier tube,
sachant que l'unité d'alimentation fournit le mélange dans le premier et le deuxième tube, et l'unité d'évacuation évacue le mélange depuis le premier et le deuxième tube.

3. L'échangeur thermique d'humidification de la revendication 2, sachant que l'unité d'alimentation comprend :
une partie alimentation en combustible via laquelle le combustible est fourni ;
une partie alimentation en eau via laquelle l'eau est fournie ; et
une partie mélange dans laquelle le combustible fourni depuis la partie alimentation en combustible et l'eau fournie depuis la partie alimentation en eau sont mélangés, la partie mélange étant connectée au premier et au deuxième tube.

4. L'échangeur thermique d'humidification de la revendication 2, sachant que l'unité d'évacuation comprend un tube de collecte vers lequel le mélange fourni depuis le premier tube et le mélange fourni depuis le deuxième tube sont collectés et un tube d'évacuation connecté au tube de collecte pour évacuer le mélange vers l'extérieur du corps.

5. L'échangeur thermique d'humidification de la revendication 4, sachant que le premier et le deuxième tube sont couplés au corps d'un côté de l'unité d'alimentation et au tube de collecte d'un côté de l'unité d'évacuation.

6. L'échangeur thermique d'humidification de la revendication 1, sachant que l'unité de diffusion de flux a une forme cylindrique.

7. L'échangeur thermique d'humidification de la revendication 1, sachant que l'unité de diffusion de flux a une forme cylindrique creuse.

8. L'échangeur thermique d'humidification de la revendication 7, sachant que l'unité de diffusion de flux comprend un orifice d'évacuation défini dans une extrémité d'un côté de l'orifice d'évacuation de gaz pour évacuer de l'air à l'intérieur de l'unité de diffusion de flux.

9. L'échangeur thermique d'humidification de la revendication 2, sachant que le deuxième tube est enroulé dans une direction opposée au premier tube.
